# EUROPEAN PATENT APPLICATION

(11) **EP 2 901 902 A1**
(43) Date of publication of application: **05.08.2015**
(21) Application number: 15150818.1
(22) Date of filing: 12.01.2015
(51) Int. Cl.: A47J 41/00

(54) **Vacuum heat-insulating container**

(30) Priority: 15.01.2014 JP 2014004865
(71) Applicant: Thermos L.L.C., Schaumburg, IL 60173 (US); Thermos K.K., Tsubame-shi, Niigata-ken (JP)
(72) Inventor: Kurabe, Yasuhiro, Tsubame-shi, Niigata (JP); Matsuyama, Shin, Tsubame-shi, Niigata (JP)
(74) Representative: Lawrence, John

(57) **Abstract**

The present invention provides a metallic vacuum heat-insulating container (1) having a double wall structure wherein the outer container (4) includes a cylindrical outer cylinder (2) and a metallic bottomed cylindrical bottom cover (3); the cylindrical outer cylinder (2) has opened upper and lower ends, a barrel portion (28) between the upper and lower ends, a mouth portion (8) having an inner diameter which is smaller than that of the barrel portion (28), and a stepped portion (29) whose diameter is smaller than the diameter of the barrel portion (28) which is provided on a side surface on a lower portion of the outer cylinder (2), an opening portion in an upper portion of a metallic bottomed cylindrical bottom cover (3), which has a diameter substantially the same as the diameter of the barrel portion (28) of the outer cylinder (2), is allowed to abut on the stepped portion (29), and the abutting portions are integrated by welding.

## Description

### BACKGROUND OF THE INVENTION

### Field of the Invention

The present invention relates to a vacuum heat-insulating container in which an outer container and a bottom cover are welded together.

### Description of Related Art

Since a bottom cover of a metallic vacuum heat-insulating container in the related art is only externally fitted into an outer container, there is a concern that metal corrosion may occur due to infiltration of water into a void between the outer container and the bottom cover when the container is washed. Further, there is another concern that heat-insulating performance is degraded due to vacuum breaking occurring if the corrosion progresses. As a structure for preventing corrosion, as disclosed in Japanese Unexamined Patent Application, First Publication No. 2000-316729, a structure is known that prevents infiltration of water into a void between the outer container and the bottom cover by welding the bottom cover to the outer container. However, in this structure, a brazing material that seals a discharge hole for a vacuum treatment is exposed to the outer surface of the outer container.

For this reason, in Japanese Unexamined Patent Application, First Publication No. 2000-316729, a brazing material is protected by bonding a cover sheet thereto. However, by only bonding a cover sheet to a brazing material, it is difficult to prevent infiltration of water at the time of washing the outer container. Accordingly, metal corrosion of the container still may occur in the case where water infiltrates the space between the cover and the container.

Moreover, since the cover sheet is mainly formed of a synthetic resin, there is a possibility that the cover sheet is peeled off from the brazing material because of insufficient heat resistance during washing or drying (for example, at the time of using a dishwasher or a dish dryer) or sterilizing (for example, at the time of using a sterilized cabinet) in a high-temperature environment. In addition, since it is difficult to protect the brazing material from an impact caused by a fall or the like only by means of a cover sheet made of a synthetic resin, there is a concern that the brazing material may be broken and heat-insulating performance may be degraded.

In a container disclosed in Japanese Patent No. 5146926, water does not infiltrate into a void between a protective plate and an outer container, but, because the protective plate is made of a synthetic resin or the like, there is a possibility that heat resistance or durability is not sufficient, for example, to withstand an impact caused by a fall.

Meanwhile, in Japanese Unexamined Patent Application, First Publication No. 2001-087144, a plate material made of stainless steel is adhered as a protective member, but heat resistance is insufficient depending on the kind of adhesive so that the protective member may be peeled off when used in a high-temperature environment. Further, welding the protective member to the bottom surface of an outer container can be considered, but it is difficult to weld a plate member because the bottom surface of the outer container tends to be easily buckled by a vacuum treatment and the flatness is insufficient.

### SUMMARY OF THE INVENTION

Accordingly, a metallic vacuum heat-insulating container is provided that prevents corrosion of a container due to infiltration of water into a void between an outer container and a bottom cover, protects a vacuum-sealing material from an impact caused by a fall or the like without a protective body being peeled off even in a high-temperature environment, and has excellent productivity.

That is, according to an aspect of the invention, a metallic vacuum heat-insulating container is provided that has a double wall structure in which a metallic bottomed cylindrical inner container and a metallic bottomed cylindrical outer container are integrated in respective mouth portions. In such container, air may be discharged from thevoid between the inner container and the outer container via a discharge hole provided on the bottom surface of the outer container. The discharge hole may be sealed with a vacuum-sealing material. The inner container and outer container, together with the vacuum sealing material, may form a vacuum heat-insulating layer. The outer container may include an cylindrical outer cylinder whose upper end and lower end are both opened. The mouth portion of the outer container, an opening portion of the upper end, may be smaller than a barrel portion. A disk-like outer bottom, which is integrated by welding, may be provided on the lower end of the outer cylinder., A stepped portion whose diameter is smaller than the diameter of the barrel portion may be provided on a side surface in the lower portion of the barrel portion of the outer cylinder. An opening portion of an upper portion of a metallic bottomed cylindrical bottom cover, which has a diameter substantially the same as the diameter of the barrel portion, is allowed to abut the stepped portion. The abutting portions are integrated by welding.

The metallic vacuum heat-insulating container according to a second aspect of the invention may include at least one or more reinforcing stepped portions on the bottom surface of the bottom cover.

According to the first aspect of the invention, since the stepped portion having a diameters smaller than that of the barrel portion is provided on the side surface of the bottom portion of the outer container, the opening portion in the upper portion of the metallic bottomed cylindrical bottom cover is allowed to abut on the stepped portion, and the abutting portions are integrated by welding, water does not infiltrate into a void between the outer container and the bottom cover. Also, the vacuum-sealing material can be strongly protected because the bottom cover is made of a metal, and the bottom cover serving as a protective body is not peeled off even in a high-temperature environment because of the integration by welding. Further, the productivity can be improved by welding the opening portion of the bottom cover to the stepped portion on the side surface which is hardly or not at all buckled by the vacuum treatment.

According to the second aspect of the invention, since at least one or more reinforcing stepped portions may be included on the bottom surface of the bottom cover, the void between the outer container and the bottom cover is tightly sealed by welding, and it is possible to prevent the bottom cover from being swollen even when the inner pressure of the tightly sealed space is increased in a high-temperature environment. Further, there is an effect of preventing deformation due to an impact caused by a fall or the like.

### BRIEF DESCRIPTION OF THE DRAWINGS

FIG. 1 is a cross-sectional view illustrating a metallic vacuum heat-insulating container according to a first embodiment.
FIG. 2 is an enlarged cross-sectional view illustrating a main portion of the metallic vacuum heat-insulating container of FIG. 1.
FIG. 3 is a perspective view of the metallic vacuum heat-insulating container according to the first embodiment.
FIG. 4 is a front view of the metallic vacuum heat-insulating container according to the first embodiment.
FIG. 5 is a top view of the metallic vacuum heat-insulating container according to the first embodiment.
FIG. 6 is a bottom view of the metallic vacuum heat-insulating container according to the first embodiment.
FIG. 7 is a cross-sectional view of a metallic vacuum heat-insulating container according to a second embodiment.
FIG. 8 is a cross-sectional view illustrating a metallic vacuum heat-insulating container according to a third embodiment.

### DETAILED DESCRIPTION OF THE INVENTION

Preferred embodiments of the present invention will be described with reference to the accompanying drawings. In addition, the embodiments described below do not limit the contents of the aspects of the present invention. Further, all configurations described below are not necessarily required for the present invention.

### First embodiment

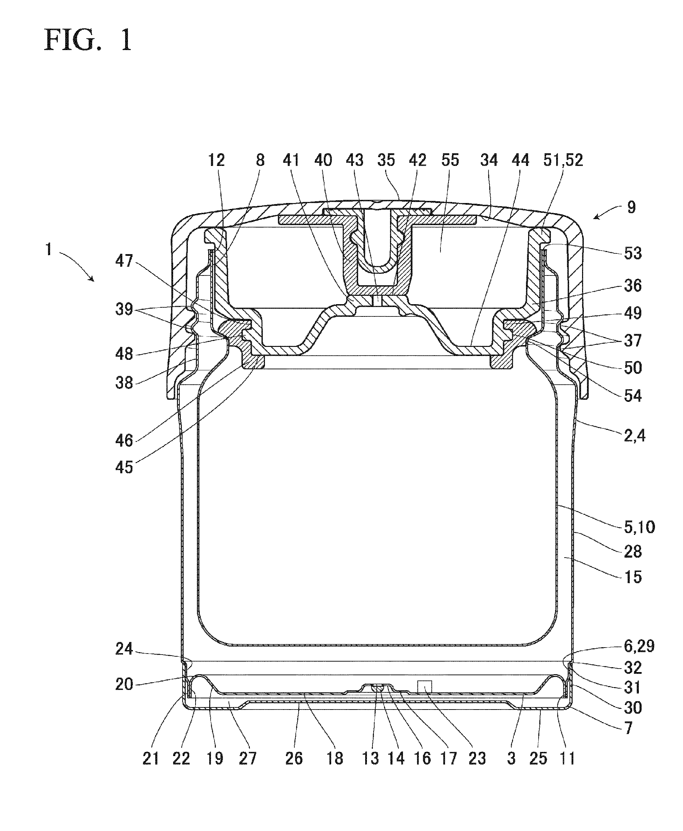

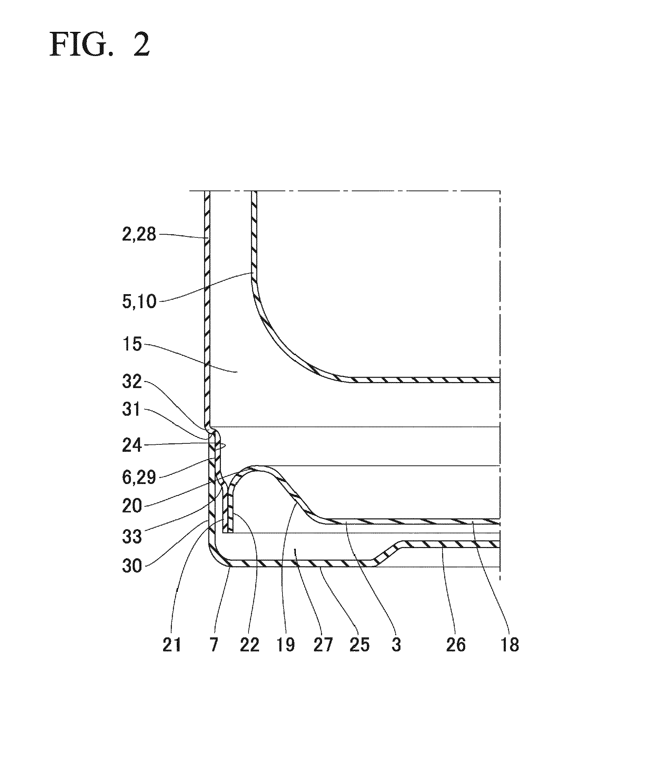

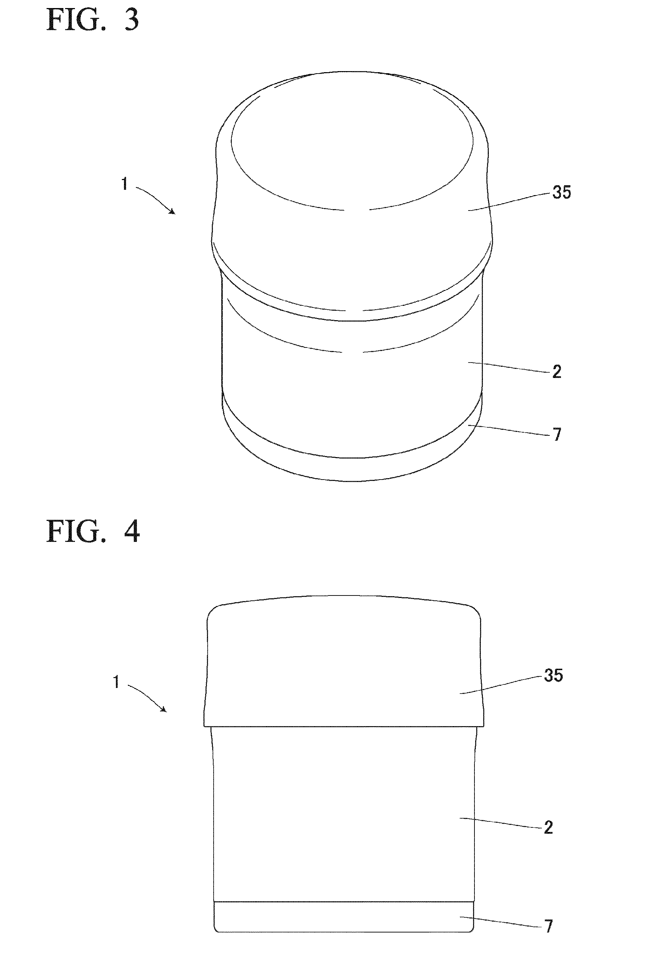

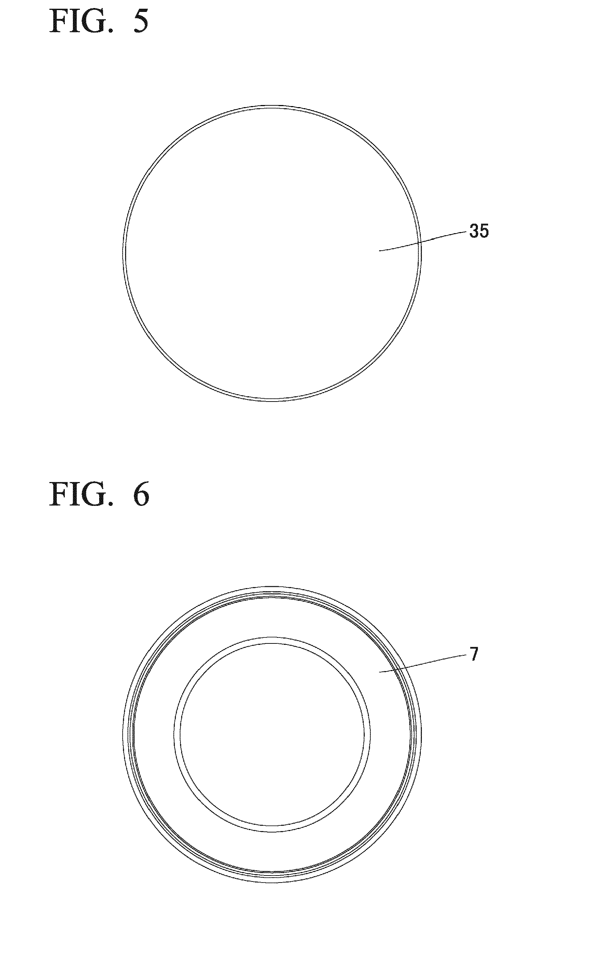

Hereinafter, FIGS. 1 to 6 illustrate a metallic vacuum heat-insulating container according to a first embodiment of the present invention. A metallic vacuum heat-insulating container 1 includes an outer container 4 formed by welding an outer bottom 3 to the bottom of an outer cylinder 2; a bottomed cylindrical inner container 5 disposed in the inside of the outer container 4; a cylindrical bottom cover 7 welded to a side surface 6 in the lower portion of the outer cylinder 2; and a lid unit 9 that opens and closes a mouth portion 8 of the inner container and is detachably mounted on the upper portion of the outer container 4. The inner container 5, the outer container 4, and the bottom cover 7 are formed of stainless steel, for example, SUS304 (18-8 stainless steel).

The outer diameter of the inner container 5 is formed to be smaller than the inner diameter of the outer container 4 since the inner container 5 is disposed in the outer container 4. Further, in order to improve heat-insulating performance as a heat-insulating container, metal plating using a metal with a small radiation rate or winding of a foil is provided for an outer surface 10 of the inner container as preventive radiation countermeasures.

The inner container 5 is inserted from the opening portion 11 in the lower portion of the outer container 4, and the mouth portion 8 of the inner container and a mouth portion 12 of the outer container which is an opening portion on the upper end of the outer container are bonded by welding over the whole circumference. The outer bottom 3 is bonded to the opening portion 11 in the lower portion of the outer container 4 accommodating the inner container 5 over the whole circumference by welding and a container having a double wall structure in which the inner container 5 and the outer container 4 are integrated is formed. Further, a vacuum heat-insulating layer 15 is formed in the void between the inner container 5 and the outer container 4 through a vacuum treatment in which air in a void between the inner container 5 and the outer container 4 is discharged through a discharge hole 13. The discharge hole 13 is formed in the center of the outer bottom 3 and communicates the inside and the outside of the outer container 4.The discharge hole 13 is sealed with a vacuum-sealing material 14. Further, a metal brazing material formed of Sn or a Sn alloy containing Ag, Cu, Ni, Bi, or Zn, or a glass brazing material is used for the vacuum-sealing material 14.

In the center of the outer bottom 3, a shallow outer bottom concave portion 16, which is also flat and circular, is formed on the vacuum heat-insulating layer 15 side. The outer bottom concave portion 16 has a smaller diameter when compared to the diameter of the outer bottom 3 and has a function of preventing the vacuum-sealing material 14 from melting during a vacuum-sealing process from flowing out to the periphery.

An annular outer bottom stepped portion 17 having a bottom which is shallower than that of the outer bottom concave portion 16 is formed on the outside of the outer bottom concave portion 16. When the outer bottom concave portion 16 and the outer bottom stepped portion 17 are provided, the strength of the outer bottom 3 is increased compared to a case where the outer bottom is a flat plate and decreasing buckling of the outer bottom 3 during the vacuum treatment. Further, when the strength of the outer bottom 3 is increased, the outer diameter of the outer bottom stepped portion 17 can be changed. In addition, a plurality of outer bottom stepped portions 17 may be provided.

Further, an annular outer bottom surface portion 18 is formed on the outside of the outer bottom stepped portion 17, a tapered portion 19 whose diameter becomes larger toward the upper side is formed on the further outside thereof, and an annular narrow width flat portion 20 is formed on the still further outside thereof. An outer bottom outermost portion 22 directed vertically downward so as to be parallel to a side surface lowermost portion 21 of the outer cylinder 2 is formed on the outside of the narrow width flat portion 20. The outer bottom outermost portion 22 is an outermost portion of the outer bottom 3, and the end surface is aligned with the side surface lowermost portion 21 of the outer cylinder 2 and integrated by welding. Further, the diameter of the side surface lowermost portion 21 is larger than that of the barrel portion of the inner container 5.

A getter 23 is positioned by welding on the surface of the vacuum heat-insulating layer 15 side of the outer bottom 3, and the getter 23 adsorbs gas generated from the vacuum heat-insulating layer 15. A welding trajectory of the getter 23 is formed on the outer bottom 3, but the welding trajectory does not appear from the appearance of the metallic vacuum heat-insulating container 1 which is a product because the welding trajectory is covered by the bottom cover 7. Therefore, the getter 23 may be positioned in any of the outer bottom stepped portion 17, the outer bottom surface portion 18, the tapered portion 19, and the narrow width flat portion 20 as long as the getter 23 is not in a position capable of blocking the discharge hole 13.

The bottom cover 7 has a cylindrical shape having an opening portion 24 in the upper portion thereof and a reinforcing stepped portion 26 which is upwardly convex is provided on the bottom surface 25. The reinforcing stepped portion 26 is flat and circular and the diameter thereof is smaller than that of the inner container 5. Further, the surface other than the reinforcing stepped portion 26 in the bottom surface 25 is a surface on which the container is placed and is formed flat for stable placing of the container.

Since the strength of the bottom cover 7 is increased by forming the reinforcing stepped portion 26 compared to a case where the bottom cover is a flat plate, it is possible to prevent the bottom cover 7 from being swollen even when the metallic vacuum heat-insulating container 1 is placed in a high-temperature environment and the inner pressure of a tightly sealed space 27 formed in the void between the outer container 4 and the bottom cover 7 is increased. Further, deformation of the bottom cover 7 due to an impact caused by a fall or the like can be prevented. In addition, the metallic vacuum heat-insulating container 1 can be stably placed, the outer diameter of the reinforcing stepped portion 26 can be changed when the strength of the bottom cover 7 can be increased, and a plurality of the reinforcing stepped portions 26 may be provided.

A stepped portion 29 whose diameter is smaller than that of a barrel portion 28 and larger than that of the side surface lowermost portion 21 is formed on the side surface 6 in the lower portion of the outer container 4. The inner surface of the opening portion 24 of the bottom cover 7 is fitted on the outer surface of the stepped portion 29 such that the inner surface of the opening portion 24 abuts on the outer surface of the stepped portion 29. Since the diameter of the stepped portion 29 of the outer container 4 is formed to be small by a thickness of a barrel portion 30 of the bottom cover serving as a side wall of the bottom cover 7, when the outer container 4 and the bottom cover 7 are fitting together, the barrel portion 28 of the outer container 4 and the barrel portion 30 of the bottom cover become flush or the diameter of the barrel portion 30 of the bottom cover is smaller than that of the barrel portion 28. In addition, the width of a difference in step of the stepped portion 29 in the radial direction is formed to be narrow such that buckling is unlikely to occur during the vacuum treatment.

A first bent portion 32 is formed between the barrel portion 28 and the stepped portion 29 of the outer container 4, and the bottom cover 7 is positioned by fitting on the first bent portion 32 such that the bottom cover 7 abuts on the first bent portion 32. Moreover, the outer container 4 and the bottom cover 7 are integrated with each other by an end portion 31 and the first bent portion 32 being welded and bonded to each other.

Since the end portion 31 and the first bent portion 32 are welded over the entire circumference of the end portion 31 and the first bent portion 32 without a gap, it is possible to prevent infiltration of water into a void between the outer container 4 and the bottom cover 7. Accordingly, corrosion of the outer container 4, the bottom cover 7, and the vacuum-sealing material 14 in the tightly sealed space 27 due to infiltration of water can be prevented.

Moreover, since the bottom cover 7 is bonded to the outer container 4 by welding and the vacuum-sealing material 14 is completely covered by the bottom cover 7, the vacuum-sealing material 14 is protected from an impact caused by a fall or the like. Therefore, a member for protecting the vacuum-sealing material 14 such as a protective plate for blocking the outer bottom concave portion 16 formed on the outer bottom 3 becomes unnecessary and thus reduction in production cost and simplification of working processes can be realized.

Further, a second bent portion 33 formed between the stepped portion 29 and the side surface lowermost portion 21 and the side surface lowermost portion 21 have diameters smaller than that of the stepped portion 29. The bottom cover 7 only abuts on the stepped portion 29 and the first bent portion 32 and does not abut on other portions in a state in which the bottom cover 7 is fitted on the outer container 4. For this reason, it is possible to prevent a buckled portion from being brought into contact with the side surface lowermost portion 21 and to protect a welded portion between the side surface lowermost portion 21 and the outer bottom outermost portion 22 because of the presence of the tightly sealed space 27 even in a case where the outer bottom 3 is buckled to the inside due to an impact caused by a fall or the like. Similarly, it is possible to prevent the buckled portion from being brought into contact with the vacuum-sealing material 14 and to protect the vacuum-sealing material 14.

During the vacuum treatment applied to the void between the inner container 5 and the outer container 4, the outer bottom 3 whose area of the plane is large tends to be easily buckled and flatness for performing a welding treatment after the vacuum treatment becomes insufficient. On the contrary, in the present embodiment, the bottom cover 7 is welded not to the outer bottom 3, but the side surface 6 in the lower portion. The reason for this is that the plane for the welding treatment can be ensured even after the vacuum treatment is completed so that work stability and productivity in the welding process are excellent because the side surface 6 in the lower portion is cylindrical while the outer bottom 3 is disk-like and thus the side surface is unlikely to buckle.

In a case where food and drink are stored in the metallic vacuum heat-insulating container 1 according to the present embodiment, t the metallic vacuum heat-insulating container 1 may be washed or dried using a dishwasher or a dish dryer after being used is exposed to a high-temperature environment for a certain amount of time for sterilization using a sterilized cabinet. Further, the metallic vacuum heat-insulating container 1 of the present embodiment may be used in a low-temperature environment, for example, outdoors in winter because of portability of the metallic vacuum heat-insulating container. Even in such a case, since the outer container 4 and the bottom cover 7 are bonded to each other by welding, durability in a low or high-temperature environment is sufficient and thus peeling of the bottom cover 7 from the outer container 4 caused by the temperature can be prevented.

The lid unit 9 includes a cylinder lid body 35 having a top surface 34 and a plug body 36 disposed in the inside of the lid body 35 and having a water-stopping function. The lid body 35 and the plug body 36 are separately configured, the mouth portion 8 of the inner container is closed by the plug body 36, and the plug body 36 is brought into close contact with the inner container 5 by screwing the lid body 35 to the outer container 4, and then the water-stopping function is exhibited. Moreover, the lid body 35 and the plug body 36 may be a single piece construction.

The lid body 35 is made of a synthetic resin, the outer diameter thereof is larger than that of the barrel portion 28 of the outer container 4, and the cross-section has an inverted U shape. Further, a male screw 37 is formed on the inner side surface of the lid body 35 and the lid body 35 is mounted on the outer container 4 by threading the male screw 37 to a female screw 39 formed on the outer side surface 38 in the upper portion of the outer container 4. The diameter of the outer side surface 38 in the upper portion is formed to be smaller than that of the barrel portion 28.

Since a lid body convex portion 40, which is downwardly convex, is formed on the top surface 34 of the lid body 35, when the lid body 35 is screwed to the outer container 4, the lid body convex portion 40 abuts on a receiving portion 41 formed on the plug body 36 and presses the plug body 36 downwardly. Abutting surfaces 42 between the lid body convex portion 40 and the receiving portion 41 are respectively flat and the lid body convex portion 40 is configured such that the lid body convex portion 40 can press the receiving portion 41 vertically downward. Moreover, the lid body convex portion 40 is formed of a silicone resin. Further, the lid body convex portion 40 and the receiving portion 41 may be respectively provided in plural.

A vent hole 43 ventilating the inside and the outside of the inner container 5 is formed in the center of the receiving portion 41. The vent hole 43 is blocked by the lid body convex portion 40 that abuts on the receiving portion 41 when the lid body 35 is mounted on the outer container 4 and the inner container 5 is tightly sealed. In addition, when the lid body 35 is peeled off from the outer container 4, the vent hole 43 is opened and the inside and the outside of the inner container 5 is ventilated. Accordingly, the inner pressure of the inner container 5 becomes equivalent to the atmospheric pressure so that the plug body 36 can be easily detached.

Since the plug body 36 is bottomed and cylindrical and the receiving portion 41 formed on a bottom portion 44 has an upwardly convex shape, the cross-section has a W shape. Further, the diameter of the lower portion of the plug body 36 is smaller than that of the upper portion thereof, and a water-stopping member 46 exhibiting a water-stopping function by being brought into close contact with the inner container 5 is fitted on the side surface in the lower portion of the plug body 36. The water-stopping member 46 covers an outer periphery 45 on the bottom surface of the plug body 36. In addition, the water-stopping member 46 is a so-called rubber packing formed of silicone rubber. Moreover, the plug body 36 may be made of a synthetic resin.

A small concave portion 47 and a small convex portion 48 positioned below the small concave portion 47 (whose cross-sections have a rectangular shape respectively) are formed on the lower portion of the side surface of the plug body 36. In addition, a small projection 49 and a small receiving portion 50 positioned below the small projection 49 (whose cross-sections have a rectangular shape respectively) are formed on the inner surface of the water-stopping member 46. For this reason, in a case where the water-stopping member 46 is fitted on the plug body 36, since the small projection 49 is fitted on the small concave portion 47 and the small convex portion 48 is fitted on the small receiving portion 50, positioning and stopping of the plug body 36 and the water-stopping member 46 are performed.

Moreover, a lowering stopping portion 52 for a convex portion is formed on the outside of an upper end 51 of the opening portion of the plug body 36. When the lowering stopping portion 52 abuts on a joint end 53 between the inner container 5 and the outer container 4, lowering of the plug body 36 more than necessary is prevented. In a state in which the lid body 35 and the plug body 36 are mounted on the container, the upper end of the lowering stopping portion 52 abuts on the top surface 34 of the lid body 35.

The water-stopping member 46 fitted on the plug body 36 is brought into close contact with a seal portion step 54 formed on the slightly lower side of the mouth portion 8 of the inner container 5 and exhibits the water-stopping function. The diameter of the seal portion step 54 is formed to be smaller than those of the barrel portion and the mouth portion 8 of the inner container 5.

In a state in which the lid body 35 and the plug body 36 are mounted on the container, a space 55 is formed between the lid body 35 and the plug body 36. Since the space 55 is filled with air, a constant heat-insulating effect is exhibited.

Hereinafter, a method of producing the metallic vacuum heat-insulating container 1 of the present embodiment will be described.

First, the inner container 5 is inserted into the outer container 4 from the opening portion 11 in the lower portion of the outer container 4, and the mouth portion 8 of the inner container is bonded to the mouth portion 12 of the outer container by welding. Since the void between the inner container 5 and the outer container 4 is made into the vacuum heat-insulating layer 15, the mouth portion 8 of the inner container and the mouth portion 12 of the outer container are welded over the entire circumference without a gap. Further, since the inner container 5 and the outer container 4 are welded such that the end surface of the mouth portion 8 of the inner container and the end surface of the mouth portion 12 of the outer container are aligned, the joint end 53 becomes flat without a difference in step.

Next, the outer bottom 3 to which the getter 23 is welded is bonded to the opening portion 11 in the lower portion of the outer container 5 by welding. The welding is performed over the entire circumference by aligning the respective end surfaces without a gap in the side surface lowermost portion 21 of the outer container 5 and the outer bottom outermost portion 22 of the outer bottom 3. In this manner, a container having a double wall structure in which the inner container 5 and the outer container 4 are integrated is formed.

Next, air in the void between the inner container 5 and the outer container 4 is discharged through the discharge hole 13 formed on the outer bottom 3 so as to be a vacuum, and the discharge hole 13 is sealed with the vacuum-sealing material 14. In this manner, the vacuum heat-insulating layer 15 is formed in the void between the inner container 5 and the outer container 4.

Next, the bottom cover 7 is fitted on the outer container 4 from the lower side of the outer container 4 and bonded thereto by welding. The bottom cover 7 is fitted such that the end portion 31 abuts on the first bent portion 32 and thus the bottom cover 7 is positioned. The end portion 31 and the first bent portion 32 are welded over the entire circumference and the tightly sealed space 27 is formed in a void between the outer container 4 and the bottom cover 7.

Finally, the mouth portion 8 of the inner container is closed by the plug body 36 and the lid body 35 is screwed to the outer container 4, thereby completing the metallic vacuum heat-insulating container 1.

As described above, in the metallic vacuum heat-insulating container of the present embodiment, the metallic vacuum heat-insulating container 1 has a double wall structure in which the metallic bottomed cylindrical inner container 5 and the metallic bottomed cylindrical outer container 4 are integrated in respective mouth portions 8 and 12. The container 1 discharges air in a void between the inner container 5 and the outer container 4 from the discharge hole 13 provided on the bottom surface 16 of the outer container 4. The discharge hole 13 is sealed with the vacuum-sealing material 14 to be made into the vacuum heat-insulating layer 15, in which the outer container 4 is the cylindrical outer cylinder 2 whose upper end and lower end are both opened. the inner diameter of the mouth portion 12 of the outer container which is an opening portion of the upper end is smaller than that of a barrel portion 28 The disk-like outer bottom 3 is be integrated with the lower end of the outer cylinder 2 by welding The stepped portion 29 whose diameter is smaller than the diameter of the barrel portion 28 is provided on the side surface 6 on the lower side of the barrel portion 28 of the outer cylinder 2, the opening portion 24 of the metallic bottomed cylindrical bottom cover 7, which has a diameter substantially the same as the diameter of the barrel portion 28, is allowed to abut on the stepped portion 29, and the abutting portions are integrated by welding.

Accordingly, since water does not infiltrate into the void between the outer container 4 and the bottom cover 7 and the bottom cover 7 is made of a metal, the vacuum-sealing material 14 can be securely protected.

Further, because of integration by welding, the bottom cover 7 is not peeled off even in a high-temperature environment.

Further, productivity can be improved by welding the opening portion 24 of the bottom cover 7 to the stepped portion 29 which is hardly buckled because of the vacuum treatment.

Further, in the metallic vacuum heat-insulating container of the present embodiment, since one or more reinforcing stepped portions 26 are included on the bottom surface 25 of the bottom cover 7, the void between the outer container 4 and the bottom cover 7 is tightly sealed by welding. Also, it is possible to prevent the bottom cover 7 from being swollen even when the inner pressure of the tightly sealed space 27 is increased in a high-temperature environment. Further, there is an effect of preventing deformation due to an impact caused by a fall or the like.

### Second embodiment

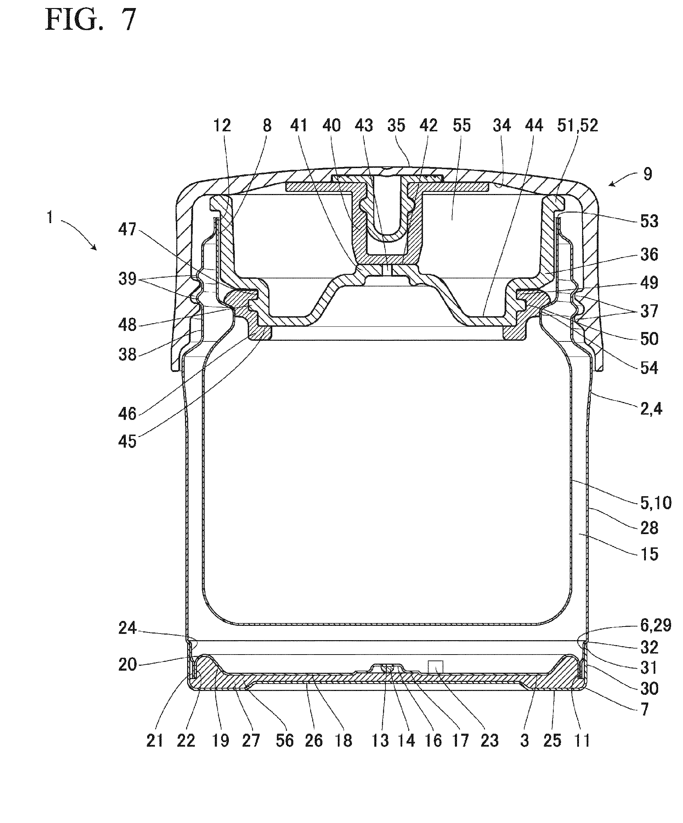

FIG. 7 illustrates a metallic vacuum heat-insulating container of a second embodiment of the present invention. The constituent elements which are the same as those of the first embodiment are denoted by the same reference numerals and the description thereof is not repeated.

In the present embodiment, a buffering material 56 is disposed in the tightly sealed space 27 which is a void between the outer container 4 and the bottom cover 7.

The buffering material 56 is a foamed molded body formed of expanded polystyrene or expanded polypropylene and has a shape substantially the same as the tightly sealed space 27 formed in a state in which the bottom cover 7 is bonded to the outer container 4. Therefore, since the buffering material 56 is accommodated in the tightly sealed space 27 without being floated, the buffering material 56 is not required to be fixed by an adhesive or the like.

The buffering material 56 prevents the vacuum-sealing material 14 from being damaged when the bottom cover 7 directly hits the vacuum-sealing material 14 in a case where the bottom cover 7 of the metallic vacuum heat-insulating container 1 is deformed in the inside thereof due to an impact caused by a fall or the like.

In addition, since the buffering material 56 is disposed in the tightly sealed space 27 formed by the outer container 4 and the bottom cover 7 being bonded to each other by welding, water does not reach the buffering material 56 through infiltration from the outside. Therefore, corrosion of the buffering material 56 due to water or growth of mold thereon does not occur.

### Third embodiment

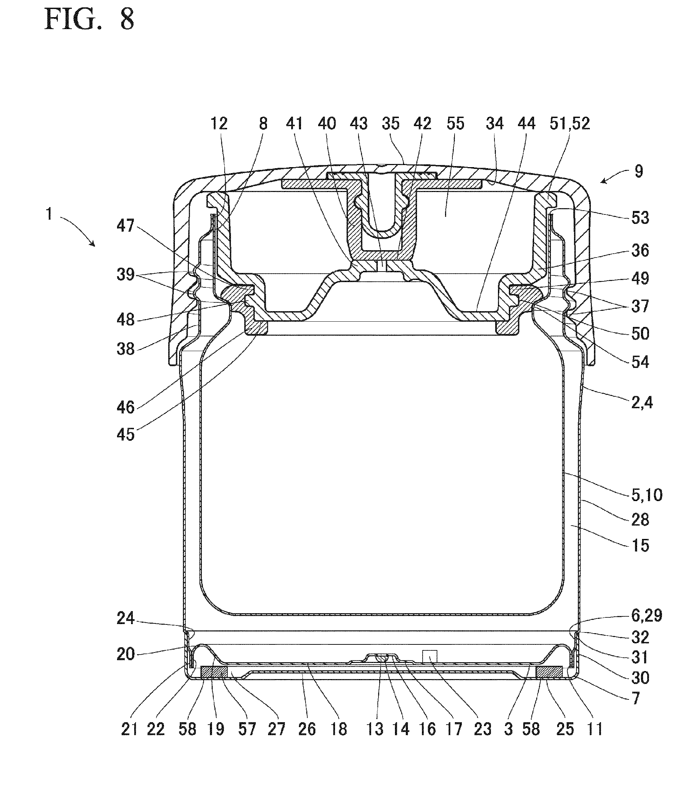

FIG. 8 illustrates a metallic vacuum heat-insulating container of a third embodiment of the present invention. The constituent elements which are the same as those of the first embodiment are denoted by the same reference numerals and the description thereof is not repeated.

In the present embodiment, a magnet 57 is disposed in the tightly sealed space 27 which is a void between the outer container 4 and the bottom cover 7.

The magnet 57 is a circular flat plate and is disposed in the inside (in the tightly sealed space 27) of a surface 58 on which the metallic vacuum heat-insulating container 1 is placed and which is formed on the more outer peripheral side than the reinforcing stepped portion 26 of the bottom cover 7. Further, since the outer container 4 and the bottom cover 7 are bonded to each other by welding in a state of the magnet 57 being disposed in the tightly sealed space 2, water does not reach the magnet 57 through infiltration from the outside.

A permanent magnet, particularly, a neodymium magnet or a ferrite magnet is used as the magnet 57, but since water does not touch the magnet 57 as described above, a rustproof treatment is not necessary. Further, since the magnet 57 is completely covered by the bottom cover 7, an impact from the outside caused by a fall or the like is reduced and the magnet 57 is hardly or not at all damaged.

The thickness of the magnet 57 is formed to a degree as the magnet is not in contact with the outer bottom 3 in a state in which the outer container 4 and the bottom cover 7 are bonded to each other.

A metal with magnetism (for example, SUS430) is used as a material of the bottom cover 7 of the present embodiment, and since the magnet 57 is stuck to the bottom cover 7 due to the magnetic force, the magnet 57 is not required to be fixed. However, in a case where a metal without magnetism (for example, SUS304) is used as a material of the bottom cover 7, the magnet 57 is fixed to the bottom cover 7 by brazing or an adhesive with high heat resistance. Further, since the magnet 57 is watertightly disposed in the tightly sealed space 27, corrosion of the brazing or the adhesive due to water does not occur.

As described above, in the metallic vacuum heat-insulating container of the present embodiment, the magnet 57 is disposed in the inside of the surface 58 on which the metallic vacuum heat-insulating container is placed. Therefore, in a case where the metallic vacuum heat-insulating container 1 is placed on a table having magnetism, the magnet 57 is stuck to the table so that it is possible to prevent the metallic vacuum heat-insulating container 1 from being easily collapsed. Further, in a case where the metallic vacuum heat-insulating container 1 is placed on a table without magnetism, since the magnet 57 is disposed on the bottom portion of the metallic vacuum heat-insulating container 1, the gravity center of the metallic vacuum heat-insulating container 1 is lowered down due to the weight of the magnet 57 and the stability is increased so that it is possible to prevent the metallic vacuum heat-insulating container 1 from being easily collapsed. Therefore, there is an effect of preventing the metallic vacuum heat-insulating container 1 from being damaged because of a fall from the table or the like and preventing a housed object from spilling when the metallic vacuum heat-insulating container 1 is turned down in a state in which the lid unit 9 is removed.

Further, in the present embodiment, the magnet 57 may have a different shape. or Or, multiple magnets may fill the space, but the magnets are uniformly arranged in the lateral direction, the vertical direction, and the oblique direction such that the position of the gravity center of the metallic vacuum heat-insulating container 1 does not move in the lateral direction, the vertical direction, or the oblique direction.

Further, in the present embodiment, the buffering material 56 of the second embodiment may be provided. In this case, the buffering material 56 is formed along the shape of the tightly sealed space 27 in a state in which the magnet 57 is installed.

Furthermore, the present invention is not limited to the present embodiment and various modified embodiments are possible within the range not departing from the scope of the present invention. For example, a two-component configuration in which the barrel portion and the bottom portion in the inner container are provided as separate components and then bonded by welding to be an integrated component may be adopted. In addition, the capacity of the container can be appropriately changed by changing the diameter or the length of the container.

While preferred embodiments of the invention have been described and illustrated above, it should be understood that these are exemplary of the invention and are not to be considered as limiting. Additions, omissions, substitutions, and other modifications can be made without departing from the spirit or scope of the present invention. Accordingly, the invention is not to be considered as being limited by the foregoing description, and is only limited by the scope of the appended claims.

Claim 3 may depend from claim 1 or claim 2. Claim 4 may depend from claim 2 or from claim 3.

## Claims

1. A metallic vacuum heat-insulating container that has a double wall structure in which a metallic bottomed cylindrical inner container and a metallic bottomed cylindrical outer container are integrated in respective mouth portions, discharges air in a void between the inner container and the outer container from a discharge hole provided on the bottom surface of the outer container, wherein the discharge hole is sealed with a vacuum-sealing material to be made into a vacuum heat-insulating layer,
wherein the outer container includes an outer cylinder and a metallic bottomed cylindrical bottom cover;
the outer cylinder has:
opened upper and lower ends,
a barrel portion between the upper end and the lower end, the barrel portion defined by a diameter,
a mouth portion, which is an opening portion of the upper end, having an inner diameter which is smaller than the diameter of the barrel portion, and
a stepped portion having a diameter smaller than diameter of the barrel portion positioned on a side surface on a lower portion of the outer cylinder,
an opening portion in an upper portion of a metallic bottomed cylindrical bottom cover, which has a diameter substantially identical to the diameter of the barrel portion of the outer cylinder, is allowed to abut the stepped portion, and
the abutting portions are integrated by welding, thereby creating a tightly sealed space therebetween.

2. The metallic vacuum heat-insulating container according to Claim 1, further comprising at least one or more reinforcing stepped portions on the bottom surface of the bottom cover.

3. The metallic vacuum heat-insulating container according to Claim 1, wherein the tightly sealed space contains a buffering material.

4. The metallic vacuum heat-insulating container according to Claim 1, wherein the tightly sealed space contains a magnet.
